# EUROPEAN PATENT APPLICATION

(11) **EP 1 193 819 A2**
(43) Date of publication of application: **03.04.2002**
(21) Application number: 01122528.1
(22) Date of filing: 24.09.2001
(51) Int. Cl.: H02G 3/04

(54) **Modular raceway for confinement of electrical cables and the like**

(30) Priority: 02.10.2000 IT MI002123
(71) Applicant: Gianfranchi, Pier Luigi, 20123 Milano (IT)
(72) Inventor: Gianfranchi, Pier Luigi, 20123 Milano (IT)
(74) Representative: Modiano, Guido, Dr.-Ing.

(57) **Abstract**

A modular raceway for confinement of electrical cables and the like, comprising a plurality of modular elements (1,50) which can be coupled together by way of interlocking elements (3,4). Each of the modular elements (1,50) comprises a body (2) with radially arranged arms (10) which are uniformly distributed along a circumference in order to form raceway portions (11) for cable passage and end with protrusions (12) which protrude along a circumferential portion. Angular positioning elements (20,21) are further provided for the angular offset, about the longitudinal axis, of the modular elements (1,50) arranged side by side.

## Description

The present invention relates to a modular raceway for confinement of electrical cables and the like.

It is known that many fields of application in which it is necessary to gather bundles or groups of electrical cables currently use modular raceways obtained by coupling a plurality of modular elements designed to retain the various cables while allowing a certain longitudinal flexibility so as to adapt to the different arrangements that are required.

These applications, typically used in office components for the connection of terminals, telephone networks, lighting systems and the like, are currently implemented by providing an element for joining together the various modules that is constituted by a continuous filament locked at its ends.

This embodiment has the drawback that when the length of the raceway has to be changed it is necessary to completely disassemble all the parts, with the obvious related drawbacks.

Other known solutions, which use individual elements connected by means of joints, are structurally very complicated and in most cases require long times to modify the configuration of the assembly.

Moreover, another problem consists in that quite often the various cables must be inserted in a longitudinal direction, thus causing difficulties also during cable insertion.

The aim of the invention is to eliminate the drawbacks noted above by providing a modular raceway for confinement of electrical cables and the like that can be constituted by the coupling of a plurality of modular elements which are interlocked and can be assembled or disassembled without thereby altering the connection of the other elements and the various electrical wirings.

Within this aim, an object of the invention is to provide a modular raceway that allows to insert the electrical cables therein with the raceway in the assembled condition, by performing insertion in a radial direction with respect to the raceway thereby avoiding the need to remove the wirings that have already been inserted.

Another object of the present invention is to provide a modular raceway that allows to connect to its ends accessories of various kinds in order to provide connection and support and to mate with the elements to which it is applied.

Another object of the present invention is to provide a modular raceway which, thanks to its particular constructive characteristics, is capable of giving the greatest assurances of reliability and safety in use and is also competitive from a merely economical point of view.

This aim and these and other objects which will become better apparent hereinafter are achieved by a modular raceway for confinement of electrical cables and the like, according to the invention, comprising a plurality of modular elements which can be coupled together by way of interlocking means, characterized in that each of said modular elements comprises a body with radially arranged arms which are uniformly distributed along a circumference in order to form raceway portions for cable passage and end with protrusions which protrude along a circumferential portion, angular positioning means being further provided for angular offset about the longitudinal axis of the modular elements arranged side by side.

Further characteristics and advantages of the present invention will become better apparent from the description of a preferred but not exclusive embodiment of a modular raceway for confinement of electrical cables and the like, illustrated only by way of non-limitative example in the accompanying drawings, wherein:
Figure 1 is an exploded perspective view of a pair of modular elements;
Figure 2 is an elevation view of two coupled modular elements;
Figure 3 is a plan view of the two modular elements arranged side by side;
Figure 4 is a plan view of the modular element, seen from the side of the male interlocking member;
Figure 5 is a plan view of the modular element, seen from the side of the female interlocking member;
Figure 6 is a sectional view of a modular element, taken along a diametrical plane;
Figure 7 is a perspective view, taken from the side of the male interlocking member, of a different embodiment of the modular element;
Figure 8 is a perspective view of a different embodiment of the modular element, seen from the opposite side;
Figure 9 is a sectional view of a plurality of modular elements coupled to each other, with the possibility of mutual inclination;
Figure 10 is a side elevation view of coupled modular elements;
Figure 11 is a schematic elevation view of a raceway;
Figure 12 is a view of a raceway realized by multiple modular elements and with a base element and a head coupled thereto.

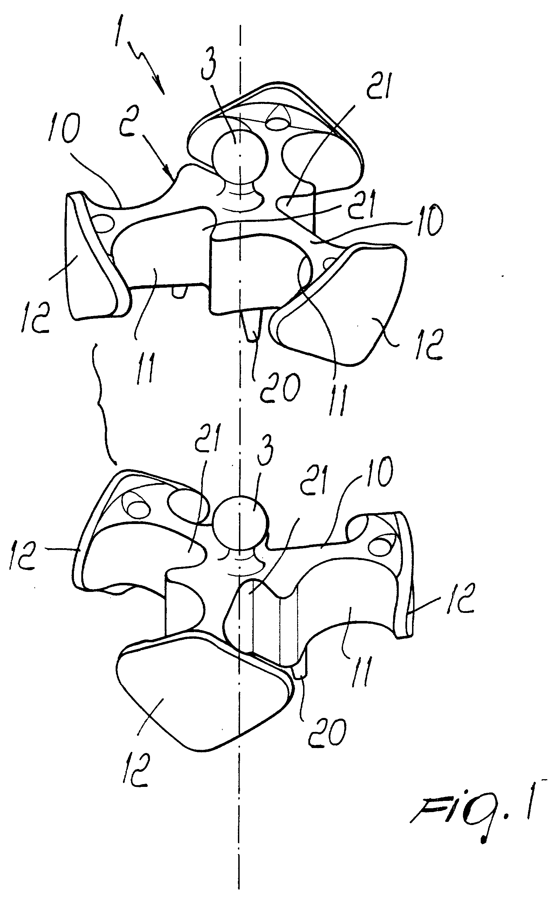

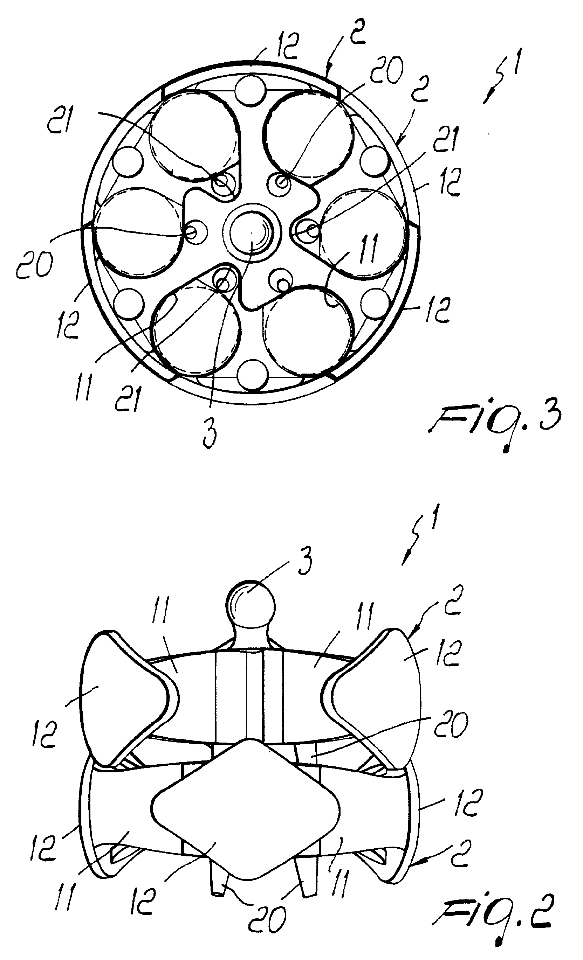

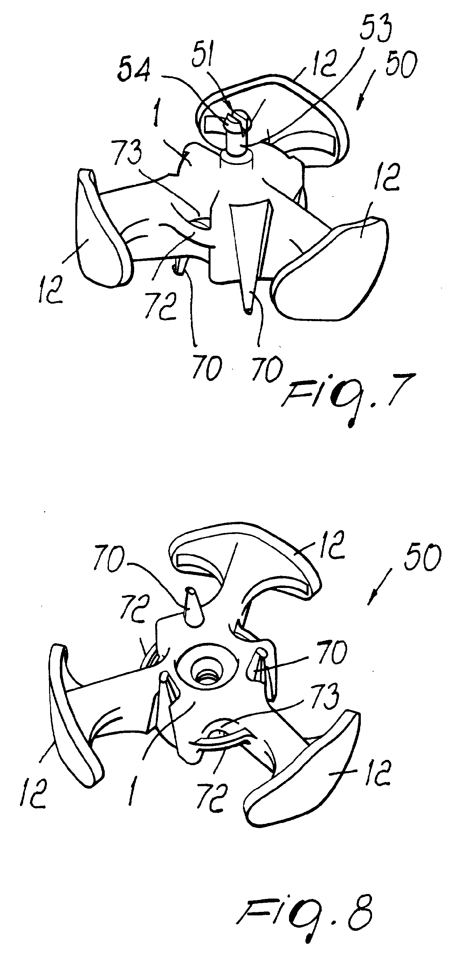

With reference to the figures, and particularly to Figures 1 to 6, the modular raceway for confinement of electrical cables and the like comprises a plurality of modular elements, designated by the reference numeral 1, which are constituted by a body 2 provided with interlocking means for the mutual coupling of the various modular elements.

The interlocking means has a male interlocking member, provided by means of a spherical protrusion 3 that protrudes from one side of the body 2, and a female interlocking member, constituted by a seat 4 which is shaped like a spherical portion and is open on the opposite side of the body 2.

The spherical protrusion 3 can be inserted with a snap action in the seat 4 and allows oscillation about the longitudinal extension of the various coupled modular elements; substantially, therefore, the modular element can oscillate with respect to the laterally adjacent modular element.

The body 2 has radially arranged arms 10, three arms in the specific example, which are uniformly distributed along a circumference and form portions 11 of the raceway that are delimited, toward the outer peripheral region, by protrusions 12 that protrude along a circumferential portion at the end of the arm 10.

In the specific example, the protrusions are lozenge-shaped, but their shape may obviously be changed in any way.

An important element of the invention consists in that means are provided for the mutual angular positioning of laterally adjacent modular elements. Said means consist of pins 20 that protrude from one face of the body 2, preferably the part provided with the seat 4, and are accommodated in recesses 21 provided in the portions 11. The recesses 21 are angularly offset with respect to the pins 20, so as to offset laterally adjacent modular elements and more specifically so that the protrusions 12 of the laterally adjacent modular element arrange themselves in the free region formed between the protrusions of the preceding or following element.

Advantageously, the angular offset provided by the pins 20 and the recesses 21 is equal to the round angle divided by twice the number of arms; with reference to the specific example, the resulting offset is 60°, since there are three arms.

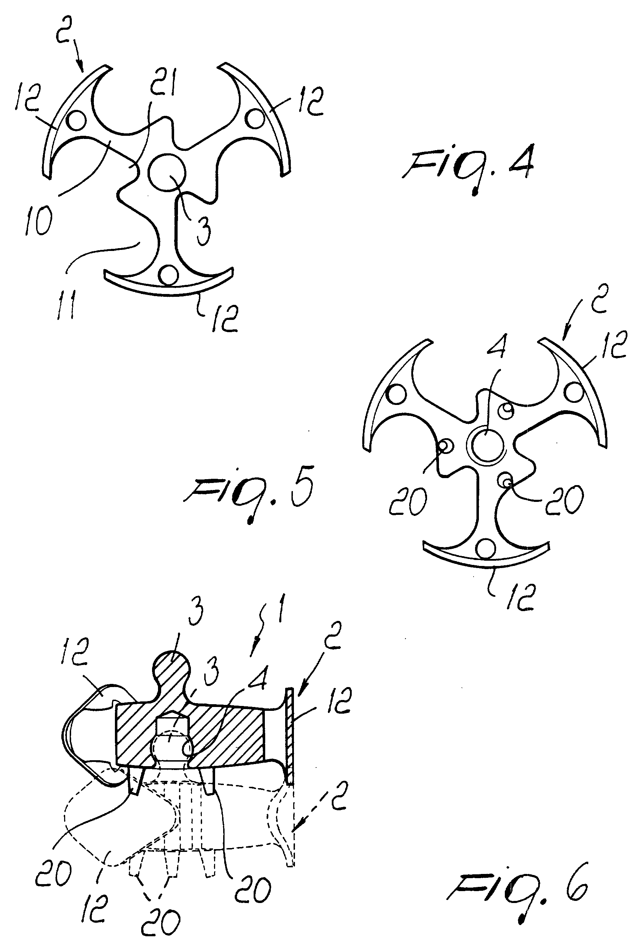

This type of solution, as clearly shown in the plan view of Figure 3, provides a series of raceways in which it is possible to insert the various cables by radial insertion, following in practice the opening produced on the circumference, which traces a substantially sinusoidal path.

With the above described embodiment, the various modular elements are coupled together while maintaining the possibility of oscillating with respect to the axis of the longitudinal extension of the modular elements arranged side by side.

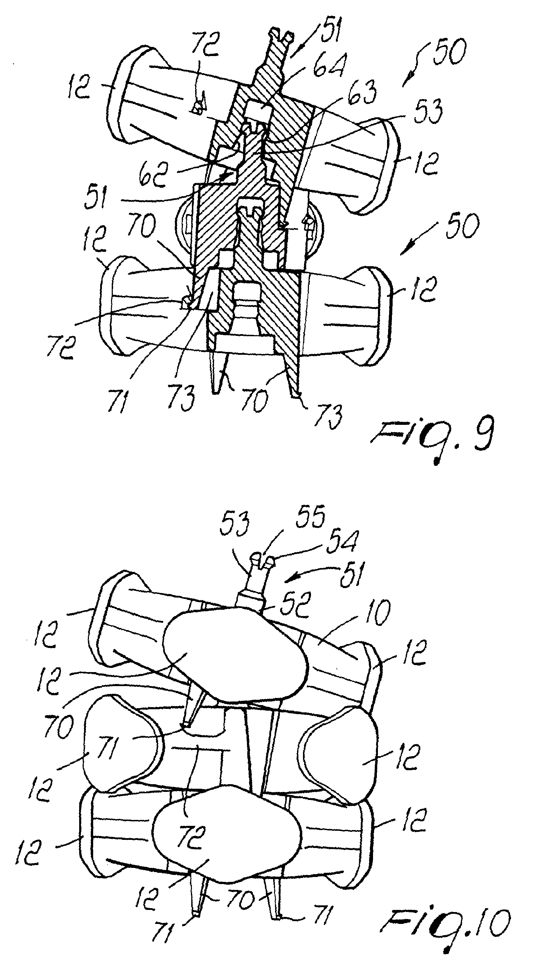

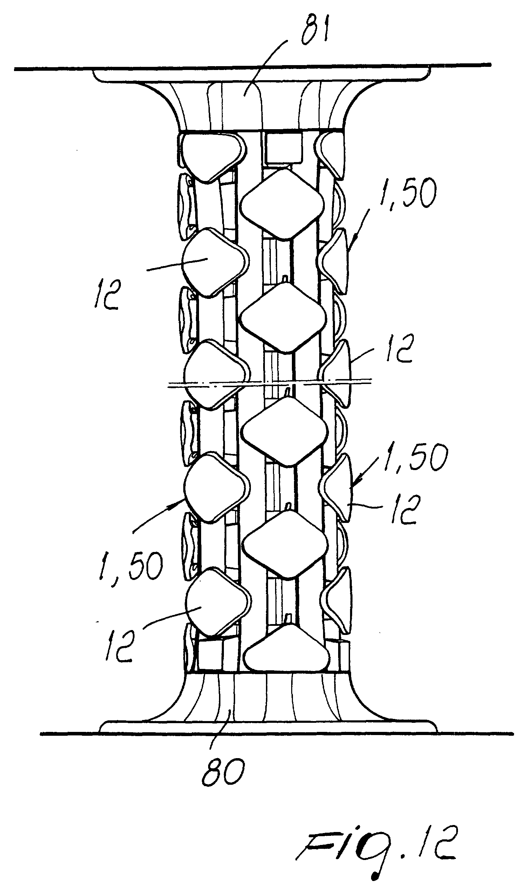

If it is necessary to block this type of oscillation, it is possible to use modular elements having an interlocking action, designated by the reference numeral 50 and shown in Figures 7 to 12.

The modular elements have a body, again designated by the reference numeral 1, which has radially arranged arms 10 that end with circumferential protrusions 12.

The male interlocking member with locking action, generally designated by the reference numeral 51, is constituted by a cylindrical shank 52 above which there is a narrow portion 53 which ends with a spherical interlocking portion 54, which may be provided with a slit 55 in order to give it elasticity.

The male interlocking member 51 can be inserted in a corresponding female seat, which has a frustum-shaped flared portion 62 that blends into a spherical seat 63, above which there is a locking chamber 64.

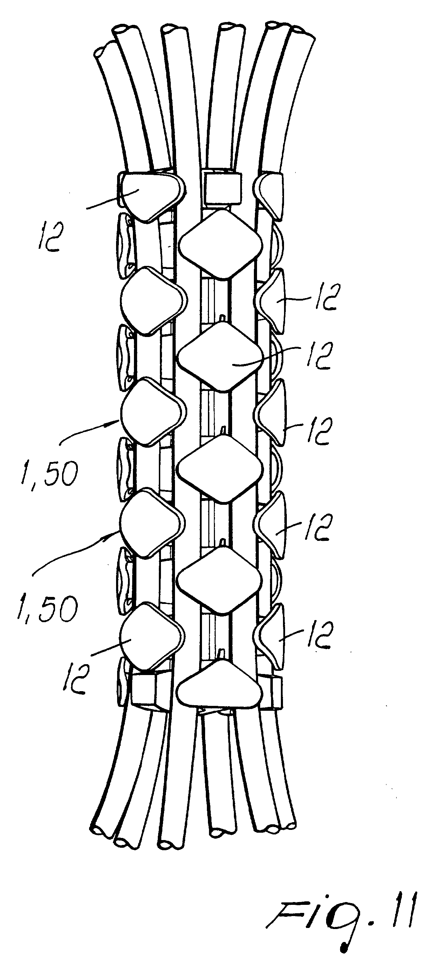

With reference to Figure 9, it is straightforward to notice that when the part 54 is inserted in the spherical seat 63 the laterally adjacent modular elements can oscillate with respect to each other, while, if pressure is applied in an axial direction with respect to the male interlocking member the interlocking portion 54 enters the chamber 64 and the base shank 52 interlocks in the frustum-shaped flared portion 62, blocking mutual oscillation with respect to the longitudinal axis of the raceway.

Moreover, in order to increase the locking action, there are pins having a locking action, designated by the reference numeral 70, which end with a locking tooth 71 that mates and locks against an arc-like cross-member 72 arranged at the end of a locking recess 73, in which the pin 70 is inserted in order to prevent the rotation of the modular elements about the longitudinal axis and achieve the above described offset.

With this embodiment, therefore, it is possible to have locking elements that can oscillate with respect to each other relative to the longitudinal axis, with the possibility of spherical rotation about axes that are perpendicular to the longitudinal extension of the raceway, but at the same time it is possible to perform locking, rendering the assembly rigid, simply by applying a pressure that causes the full insertion of the male interlocking member with locking action in the female seat with locking action and the coupling of the pins under the cross-members.

The assembly can be completed by base elements and head elements, designated by the reference numerals 80 and 81, which are designed to complete the raceway being provided.

The particularity of the invention consists in that thanks to modular elements that are structurally very simple and have a low cost it is possible to provide raceways of any length, with the advantage of assembling and disassembling the various elements without having to intervene on the electrical wiring and with the possibility to insert and remove the different electrical conductors by inserting them in the sinusoidal slot, which in practice delimits the raceways formed by means of the offset coupling of the various modular elements.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2000A002123 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A modular raceway for confinement of electrical cables and the like, comprising a plurality of modular elements (1,50) which can be coupled together by way of interlocking means (3,4), **characterized in that** each of said modular elements (1,50) comprises a body (2) with radially arranged arms (10) which are uniformly distributed along a circumference in order to form raceway portions (11) for cable passage and end with arm protrusions (12) which protrude along a circumferential portion, angular positioning means (20,21) being further provided for angular offset about the longitudinal axis of the modular elements (1,50) arranged side by side.

2. The modular raceway according to claim 1, **characterized in that** said interlocking means comprise a male interlocking member, constituted by a spherical protrusion (3) that protrudes on one side of said body (2), and a female interlocking member, constituted by a seat (4) shaped like a spherical portion and provided on the opposite side of said body (2).

3. The modular raceway according to the preceding claims, **characterized in that** said spherical protrusion (3) can be detachably inserted by snap action in said seat (4) so that oscillation about the longitudinal extension of said coupled modular elements is allowed.

4. The modular raceway according to one or more of the preceding claims, **characterized in that** said arm protrusions (12) are lozenge-shaped.

5. The modular raceway according to one or more of the preceding claims, **characterized in that** said angular positioning means comprise pins (20) which protrude from one face of said body (2) and are accommodated in recesses (21) formed in said passage raceway portions (11), said recesses (21) being angularly offset with respect to said pins (20).

6. The modular raceway according to one or more of the preceding claims, **characterized in that** said pins (20) protrude from the face provided with said seat (4).

7. The modular raceway according to one or more of the preceding claims, **characterized in that** the angular offset determined by the coupling of said pins (20) with said recesses (21) is substantially equal to an angle that corresponds to a round angle divided by twice the number of said arms (10).

8. The modular raceway according to one or more of the preceding claims, **characterized in that** said interlocking means has a male interlocking member (51) which locks said oscillation.

9. The modular raceway according to one or more of the preceding claims, **characterized in that** said male interlocking member (51) with locking action comprises a cylindrical shank (52), on top of which there is provided a narrower portion (53) that ends with a spherical interlocking portion (54).

10. The modular raceway according to one or more of the preceding claims, **characterized in that** said spherical interlocking portion (54) has a slit (55) in order to give it elasticity.

11. The modular raceway according to one or more of the preceding claims, **characterized in that** the female interlocking member has a female seat with a frustum-shaped flared portion (62) that leads into a spherical seat (63), beyond which a locking chamber (64) is arranged.

12. The modular raceway according to one or more of the preceding claims, **characterized in that** it comprises pins (70) with locking action, which end with locking teeth (71) that detachably couples and locks against arc-like cross-members (72) provided correspondingly on locking recesses (73) in which said pins (70) can be inserted for the mutual angular positioning of laterally adjacent modular elements (1).

13. The modular raceway according to one or more of the preceding claims, **characterized in that** it comprises a base element (80) and a head element (81) which can be coupled to said modular elements (1) in order to complete the raceway in a supported and/or suspended condition.
